(19) Europäisches Patentamt
European Patent Office
Office européen des brevets

(11) Numéro de publication: **0 000 004**
**B1**

(12) # FASCICULE DE BREVET EUROPEEN

(21) Numéro de dépôt: **78100037.7**

(22) Date de dépôt: **01.06.78**

(51) Int. Cl.³: **B 04 B 3/08,**
A 47 J 31/22

(54) **Dispositif de filtration centrifuge continue pour séparation, lavage ou épuisement, et application à une machine à café automatique**

(30) Priorité: **02.06.77 FR 7716927**

(43) Date de publication de la demande:
**20.12.78 Bulletin 78/01**

(45) Mention de la délivrance du brevet:
**03.09.80 Bulletin 80/18**

(84) Etats contractants désignés:
**BE CH DE GB LU NL**

(56) Documents cités:
**DE - C - 691 923**
**US - A - 1 767 905**
**US - A - 1 846 168**
**US - A - 1 950 869**

(73) Titulaire: **Cailliot, Serge**
**38, Rue du Bois de Boulogne**
**F - 92200 Neuilly-sur-Seine (FR)**
**Societe Normande de Services**
**59, Rue Colbert**
**F - 92700 Colombes (FR)**
**ANVAR Agence Nationale de Valorisation de la Recherche**
**13, rue Madeleine Michelis**
**F - 92522 Neuilly-sur-Seine (FR)**
**Societe Generale Pour Le Financement De L'Innovation Soginnove**
**50, Boulevard Haussmann**
**F - 75009 Paris (FR)**
**Cor, Bertrand**
**145, Rue de la Pompe**
**F - 75116 Paris (FR)**
**Gastinne, Arnaud**
**12, Rue Leo Delibes**
**F - 75116 Paris (FR)**

(72) Inventeur: **Cailliot, Serge**
**38, Rue du Bois de Boulogne**
**F - 92200 Neuilly-sur-Seine (FR)**

(74) Mandataire: **Casalonga, Alain**
**Bureau D. A. Casalonga Lilienstrasse 77**
**D - 8000 München 80 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 000 004 B1

# Dispositif de filtration centrifuge continue pour séparation, lavage ou épuisement, et application à une machine à café automatique

L'invention concerne la filtration en général, et plus particulièrement la préparation du café.

On sait que l'opération de filtration en général consiste à faire passer un liquide à travers une paroi poreuse qui retient des particules solides, ces particules solides pouvant être contenues au préalable en suspension dans le liquide, dans le cas d'une filtration pour séparation, ou au contraire être placées à l'avance dans le filtre puis arrosées par le liquide lorsqu'on veut procéder à une opération de lavage ou d'épuisement à l'aide d'un solvant approprié de substances actives solubles contenues dans les particules solides. C'est le cas en particulier de la préparation du café qui consiste à faire passer de l'eau chaude à travers du café moulu.

Dans le cas le plus simple, le passage du liquide s'effectue par simple gravité. On peut cependant améliorer l'efficacité de filtration en faisant passer le liquide sous l'effet de la force centrifuge en utilisant une paroi poreuse cylindriquie entraînée en rotation en grande vitesse autour de son axe. Dans les deux cas l'operation de filtration est forcément intermittente, c'est-à-dire qu'à des phases de filtration succèdent des phases de nettoyage pour l'évacuation des substances solides accumulées contre la paroi poreuse.

On connaît cependant des filtres continus dans lesquels on utilise une paroi poreuse sans fin, soit sous forme de bande sans fin, soit sous forme de cylindre rotatif, et dans ce cas on a une zone ou un secteur de filtration suivi d'une autre zone ou secteur de nettoyage, ce nettoyage étant obtenu généralement par raclage à l'aide d'une raclette fixe puis décolmatage de la paroi poreuse par un rinçage en sens inverse. Dans le cas de tels filtres continus, le passage du liquide se fait forcément par gravité ou par aspiration mais il est exclu d'opérer par voie centrifuge, le déplacement ou la rotation de la paroi poreuse étant nécessairement lent puisque c'est lui qui préside à la succession des opérations de filtrage et de lavage.

Pour surmonter les inconvénients précédents il est enfin connu, d'après le brevet allemand n° 691.923, de réaliser un filtre à la fois continu et centrifuge dont la paroi de filtrage cylindrique est rotative et constituée par un enroulement hélicoidal à spires jointives d'une longue lanière montée dans une cage rotative constituée par des rouleaux cylindriques disposés selon des génératrices extérieures de cette paroi cylindrique, la lanière étant bouclée sur elle même en un ensemble sans fin et entrainée de manière que la paroi poreuse cylindrique avance lentement dans le sens de l'axe en se renouvelant constamment. Cependant l'entraînement de la bande est assuré par un cabestan central qui reprend radialement la bande à la base du cylindre et la recycle au sommet, ce qui présente linconvénient de mal fonctionner étant donné la difficulté où l'on est de donner une tension convenable à la bande sans fin qui est simplement supportée à l'intérieur de la cage formées par les rouleaux. D'autre part ce cabestan placé au centre ainsi que les brins radiaux qui y aboutissent et en partent constituent un obstacle ne permettant pas d'utiliser la région centrale du filtre et ne permettant pas non plus de raccorder la paroi cylindrique de filtrage avec une paroi de fond. Enfin la lanière en bande sans fin est elle même perforée ce qui n'élimine pas complètement les difficultés de décolmatage.

Le but de l'invention est de réaliser un filtre centrifuge continu du type précédent mais qui élimine les inconvénients précités en réalisant un entraînement sûr et efficace tout en dégageant la partie centrale de la paroi cylindrique.

L'invention consiste, dans un filtre centrifuge sans fin du type précédent, à assurer l'entraînement de la lanière par l'entraînement en rotation sur eux même des rouleaux de la cage support par un mécanisme approprié, et à réaliser le bouclage sans fin par une sprie de retour qui s'étend d'une extrêmité à l'autre de l'enroulement hélicoidal en passant par l'extérieur de l'enroulement et de la cage à rouleaux. De plus la lanière est avantageusement dépourvue de perforations et constituée par une partie massive munie seulement d'encoches appropriées en surface.

D'autres particularitiés de l'invention apparaîtront dans la description qui va suivre d'un mode de réalisation pris comme exemple et représenté sur le dessin annexé, sur lequel:

la fig. 1 est une coupe verticale axiale d'un dispositif de filtrage selon l'invention appliqué à une machine à café;

la fig. 2 est une coupe horizontale selon II—II de la fig. 1;

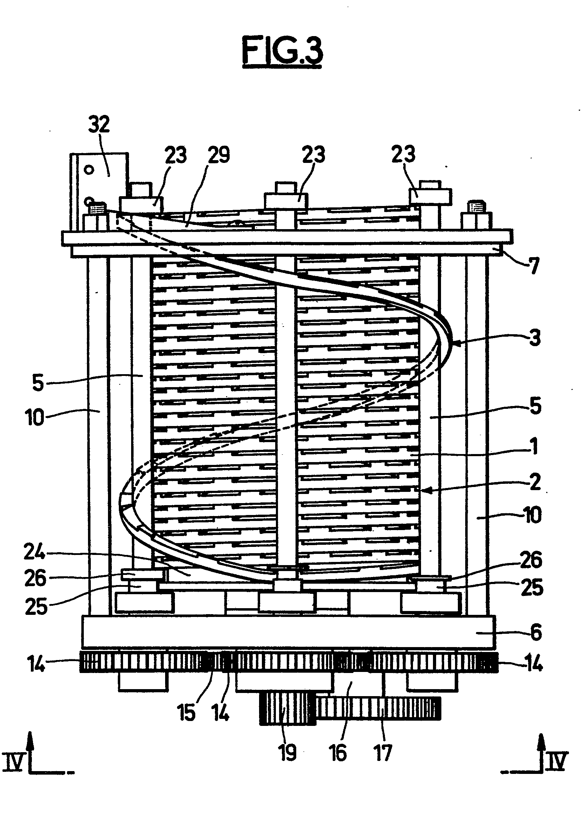

la fig. 3 est une vue extérieure en élévation de la partie essentielle du filtre dans sa cage;

la fig. 4 est une vue de dessous en coupe selon IV—IV de la fig. 3 montrant la disposition du train d'engrenages;

la fig. 5 est une vue en perspective à grande échelle d'un fragment de la lanière flexible constituant la paroi de filtration.

Conformément à l'invention, la paroi poreuse de filtration est constituée par une longue lanière flexible 1 de faible section disposée selon un enroulement hélicoïdal à spires jointives pour constituer un manchon cylindrique 2, les deux extrémités de la lanière étant raccordées entre elles par une sprie de retour 3 pour constituer un ensemble sans fin. Cette lanière flexible 1 peut être en métal ou en matière plastique, de préférence de section carrée ou rectangulaire, et elle peut avantageusement comporter dans sa face supérieure ou inférieure des encoches 4, de préférence inclinées pour aller en s'évasant vers l'extérieur en partant d'une très faible profondeur du côté destiné à constituer l'intérieur, cette profondeur correspondant à la finesse de filtration désirée, par exemple 0,1 mm.

La manchon cylindrique 2 ainsi constitué est monté dans une cage constituée par un certain nombre de rouleaux cylindriques 5, au nombre de quatre sur les figures, chacun disposés selon une génératrice du cylindre. Chacun de ces rouleaux tourillonne par sa base dans un flasque inférieur 6 et par une partie voisine de son extrémité supérieure dans un flasque supérieur 7 au moyen d'une encoche 8 débouchant vers le centre dans un alésage 9 d'un diamètre juste suffisant pour permettre le passage du manchon 2. Le flasque supérieur 7 est rigidement fixé au flasque inférieur 6 par des entretoises 10, et le flasque inférieur 6 est lui-même rigidement fixé par son moyeu il à un axe 12 tourillonnant dans des paliers fixes 13 en étant entraînés par un moteur d'entraînement non représenté.

Tout l'ensemble de la cage, comprenant les deux flasques et les quatre rouleaux verticaux, tourne donc en bloc autour de l'axe 12 à une vitesse appropriée pour obtenir la filtration centrifuge, par exemple 1500 tours/mn. En outre, les quatre rouleaux 5 sont entraînés à une faible vitesse de rotation sur eux-mêmes, tous dans le même sens, grâce à un mécanisme approprié situé en dessous du flasque 6.

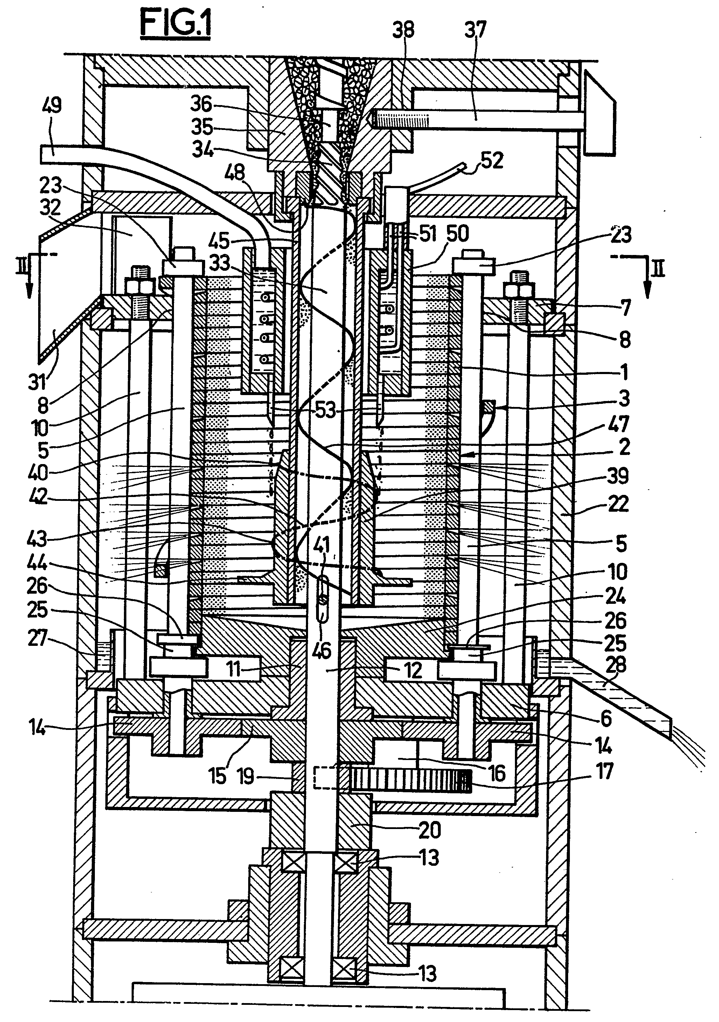

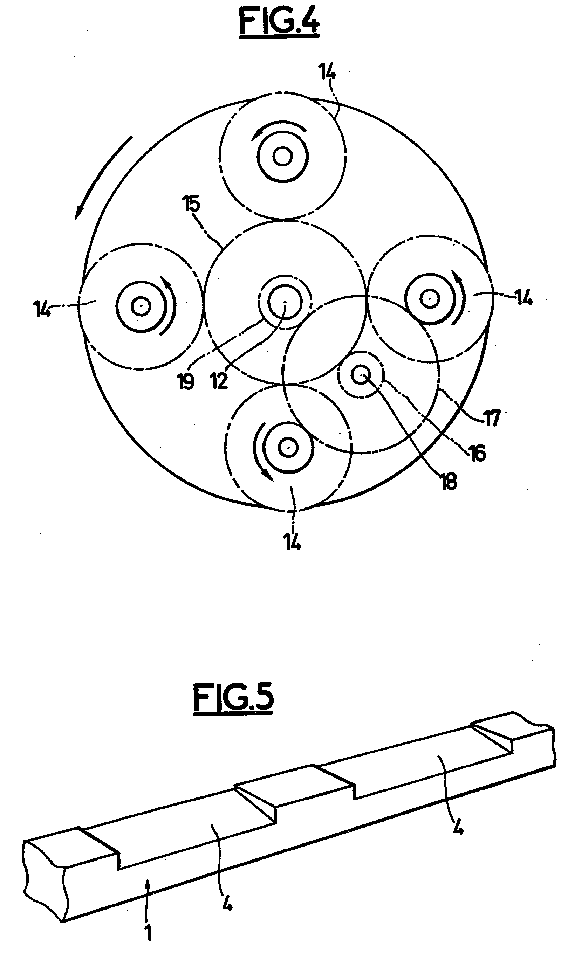

Ce mécanisme, visible en particulier sur les fig. 1 et 4. comporte un engrenage 14 solidaire de chacune des extrémités inférieures des rouleaux 5, en dessous du flasque 6, les quatre engrenages 14 engrenant simultanément sur un seul engrenage central 15 tournant fou autour de l'axe 12, cet engrenage central étant lui-même entraîné en rotation par un pignon 16 solidaire d'un engrenage 17 qui tourillonne autour d'un axe 18 porté par le flasque 6 et engrène avec un pignon central 19 monté fou sur l'axe 12 et dont la base 20 peut être immobilisée en rotation au moyen d'un dispositif approprié non représenté. Les sens de rotation sont ceux représentés par les flèches sur la fig. 4, en rappelant qu'il s'agit d'une vue de dessous, et les rapports des engrenages sont tels que les rouleaux tournent lentement sur eux-mêmes à une très faible vitesse tandis que l'ensemble de la cage tourne à grande vitesse.

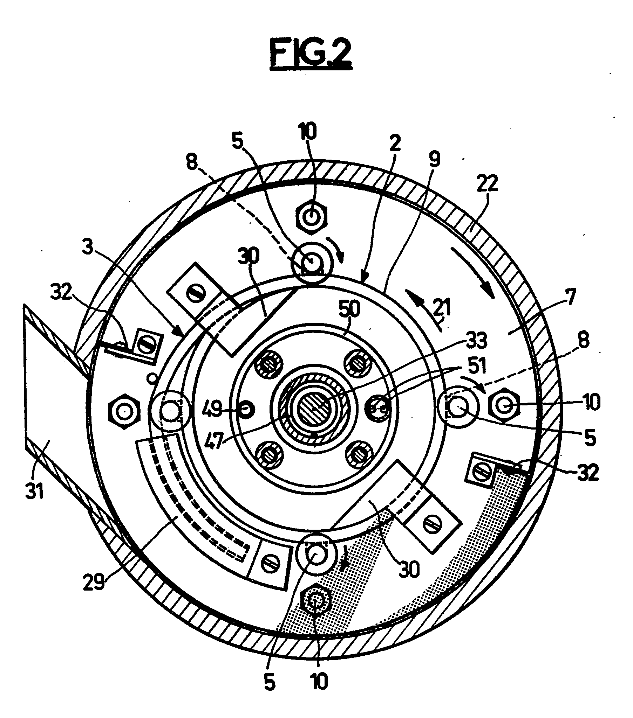

Dans ces conditions, le manchon 2 constitué par l'ensemble des spires jointives se trouve appliqué par la force centrifuge contre les rouleaux de guidage et d'entraînement 5 et par suite se met à tourner lentement sur lui-même dans le sens de la flèche 21 (voir fig. 2) dans un mouvement relatif de rotation à faible vitesse de l'ordre de 12 tours/mn dans l'exemple choisi. Bien entendu, si l'on se repère au bâti 22 de l'appareil et non plus à la cage tournante, le manchon 2 tourne en réalité dans le même sens que la cage, c'est-à-dire dans le sens des aiguilles d'une montre sur la fig. 2, et à une vitesse à peine inférieure, par exemple 1500 tours/mn pour la cage et 1448 tours/mn pour le manchon. En variante, il serait naturellement possible de faire tourner le manchon dans un sens tel que sa vitesse lente différentielle s'ajoute à celle de la cage au lieu de se retrancher.

D'autre part, le sens d'enroulement des spires jointives du manchon 2 est choisi de telle manière que, dans le mouvement relatif précité du manchon par rapport à la cage, la lanière se déroule à la partie supérieure, juste après le passage sous une des joues de retenue axiale 23 d'un des rouleaux 5, puis effectue la spire de retour 3 en passant à l'extérieur des rouleaux 5 suivants, mais de préférence à l'intérieur des entretoises 10 pour s'enrouler en continu à l'extrémité inférieure sur la surface extérieure cylindrique d'une paroi de fond 24 visible sur la fig. 1 et tournant folle autour du moyeu 11 pour pouvoir prendre par rapport à celui-ci le lent mouvement de rotation de l'ensemble du filtre. Ce mouvement est communiqué au fond 24 par engrènement ou par friction sur sa périphérie d'une zone d'entraînement 25 située à la base des rouleaux 5 au-dessous des joues de retenue axiales 26.

De cette manière l'enroulement à force d'une nouvelle spire en continu sous les précédentes oblige l'ensemble du manchon à progresser lentement vers le haut, c'est-à-dire vers son extrémité ouverte, le nombre de spires étant constant ce qui permet aux joues 23 et 26 de maintenir les spires effectivement jointives avec un léger serrage ou un jeu calculé. Dans l'exemple de réalisation, une spire se trouvant en position inférieure met environ 2 minutes 36 secondes pour arriver en haut et effectuer un cycle complet.

On comprend dès lors qu'avec un tel filtre, il suffit d'introduire le ou les produits à filtrer axialement, et de les déposer par exemple sur le fond 24, pour que ces produits se trouvent projetés sur la face intérieure du manchon 2 où a lieu la filtration, le filtrat étant projeté tangentiellement contre la paroi 22 qui entoure la cage pour s'écouler ensuite par une rigole périphérique 27 vers un goulotte d'évacuation 28, tandis que les résidus solides progressent lentement vers le haut en étant systématiquement essorés jusqu'à épuisement et finissent par être éjectés par la force centrifuge au-delà de la dernière spire c'est-à-dire au-dessus du flasque supérieur 7. Pour éviter le retour des résidus solides vers le compartiment inférieur, l'amorce supérieure de la spire en retour 3 traverse ce flasque 7 à travers une lumière ajustée entourée par un cache 29 également ajusté.

Etant donné que la lanière 1 une fois déroulée ne comporte plus aucune perforation, mais simplement de légères encoches, aucun décolmatage, ni aucun rinçage n'est nécessaire. Tout au plus on peut prévoir un raclage des trois faces lisses de la lanière et éventuellement un brossage de la face comportant les encoches 4, à l'aide d'une brosse fixe ou rotative solidaire par exemple d'un des rouleaux 5, ceci dans le cas où la force centrifuge ne suffirait pas à éjecter les résidus solides. Pour faciliter l'évacuation des résidus solides on peut également avoir deux pelles 30 situées en position fixe et inclinées d'une manière plongeante vers l'intérieur des dernières spires supérieures du manchon pour évacuer les résidus solides avant le début de déroulement de la lanière. Ces résidus solides sont donc tous les cas projetés par la force centrifuge contre la paroi 22 mais dans le compartiment supérieure où il sont évacués par une goulotte tangentielle 31. Deux pales flexibles 32, fixées verticalement sur le dessus du flasque 7 pour lécher la surface intérieure de la paroi 22, facilitent le ramassage et l'évacuation des résidus solides.

Avec un tel filtre, on peut donc alimenter en permanence dans l'axe le mélange hétérogène à séparer, ou séparément le produit pulvérulent et le liquide en cas de lavage ou d'épuisement, et évacuer en continu les résidus solides à la partie supérieure et le filtrat à la partie inférieure, et ceci dans un fonctionnement continu sans nécessiter aucun arrêt de nettoyage. Cette continuité du fonctionnement mécanique et cette automaticité du nettoyage ne sont cependant pas liées nécessairement à la continuité dans le temps des opérations. En effet, si on le désire on peut faire fonctionner le filtre selon l'invention par charges successives en prévoyant pour cela simplement un dispositif de freinage commandé de la base 20 du pignon central 19 par rapport au bâti 22. Il suffit alors dans un premier temps d'alimenter les produits tout en freinant ce dispositif, ce qui permet par l'ascension de la spirale de répartir les produits, puis dans un deuxième temps de supprimer le freinage ce qui supprime par là même le mouvement différentiel de la spirale qui cesse par conséquent son mouvement ascensionnel tout en continuant à tourner à grande vitesse, ce qui permet de poursuivre l'opération de filtrage et d'essorage aussi longtemps qu'on le désire. Enfin dans un troisième temps, il suffit de remettre en action le frein de la partie 20 pour produire à nouveau l'ascension de la spirale et l'évacuation des produits, cette phase pouvant être combinée avec la première d'un cycle suivant.

Pour l'application à la fabrication du café, le dispositif de filtrage selon l'invention présente en outre l'avantage qu'il est possible de prolonger l'axe 12 par une partie supérieure 33, séparable ou non du précédent et se plaçant dans l'axe du manchon cylindrique 2, pour entraîner à la partie supérieure un broyeur à vis de type connu pour moudre le café. Pour cela la vis de broyage 34 est taillée directement dans l'extrémité supérieure de l'axe 33 et tourne dans une partie extérieure 35 à intérieur conique située à la base d'une trémie non représentée alimentant le café en grains à l'aide d'un distributeur à débit réglable 36 qui peut être entraîné également par le même axe. Le réglage de la finesse de la mouture se fait par exemple en déplaçant la base 35 dans un mouvement hélicoïdal d'axe vertical à l'aide d'une tige de commande 37 coulissant dans une lumière inclinée 38 solidaire du bâti 22, la vis 33 étant axialement fixe.

Lorsqu'on utilise le filtre selon l'invention pour le lavage ou l'épuisement d'une substance solide pulvérulente par une substance liquide, on a intérêt à disposer d'abord la substance solide au voisinage du fond 24 en une couche cylindrique uniforme, puis à distribuer le liquide au-dessus de l'endroit où a lieu la distribution du solide. Ceci peut être réalisé très facilement selon l'invention en disposant un distributeur rotatif coaxial 39 comportant un passage central pour le produit solide et une surface extérieure au moins partiellement conique 40 sur laquelle est déversé le liquide qui se trouve ainsi projeté par la force centrifuge, le distributeur 39 étant à cet effet entraîné en rotation, par exemple à la vitesse de l'axe 12 ou 33 en étant solidarisé avec celui-ci à l'aide d'une broche traversante 41. En variante ce distributeur pourrait être solidarisé du fond 24 par des broches parallèles à l'axe, la vitesse du fond étant comme on l'a vu plus haut très peu différente de celle de l'axe.

La surface extérieure conique 40 du distributeur 39 peut se prolonger par une partie cylindrique qui comporte de préférence des aspérités pour répartir sur une certaine hauteur la pulvérisation du liquide. A titre d'exemple ces aspérités peuvent être constituées par une nervure 42 en forme de spirale hélicoidale se développant sur la surface extérieure cylindrique 43 du distributeur. En outre, une nervure circulaire 44 formant déflecteur peut être placée à la base du distributeur pour évacuer les gouttelettes de liquide qui pourraient éventuellement tomber en dehors de la surface extérieure du distributeur.

Pour l'application à une machine à café, le café moulu peut être alimenté à l'intérieur du passage axial du distributeur rotatif 39 par tout moyen approprié. En particulier, si l'on dispose d'un axe 33 et d'un broyeur 34 coaxial comme exposé plus haut, on peut parfaitement placer ce distributeur coaxialement et à l'extérieur de cet axe en le prolongeant axialement par une partie tubulaire 45 dont l'extrémité supérieure vient tourillonner à la base du cône de broyage 35. Si celui-ci se déplace axialement pour permettre le réglage comme indiqué plus haut, on prévoit une lumière oblongue 46 dans la base de l'axe 33 pour le passage de la broche 41 et permettre à ce mouvement de se produire.

Dans ce cas le café moulu qui s'échappe directement entre la vis 33 et la partie tubulaire 45 risque de se trouver plaqué par la force centrifuge contre ce dernier et de s'y accumuler. Ceci est évité selon l'invention en disposant une spirale fixe 47 en fil d'acier hélicoïdal montée librement dans l'intervalle entre l'axe 33 et l'alésage du tube 45 et du distributeur rotatif 39, en étant seulement immobilisée axialement et en rotation par fixation de son extrémité supérieure 48 dans la base du cône 35. De cette manière le café moulu se trouve acheminé régulièrement et sans possibilité de blocage jusqu'à l'extrémité inférieure du distributeur 39 où il se trouve ainsi distribué par la force centrifuge dans l'intervalle entre le fond 24 et la nervure 44 pour venir s'accumuler sur une zone de même hauteur sur la surface intérieure du manchon 2.

Toujours dans le cas de la machine à café, la substance liquide, qui est évidemment de l'eau chaude dans ce cas, peut être alimentée et chauffée en continu et distribuée sur la partie conique 40 du distributeur 39. Il est cependant préférable selon l'invention de produire une distribution d'eau par intermittence en alimentant par un débit continu un dispositif bien connu en physique sous le nom de fontaine intermittente et constitué par un siphon auto-amorçable placé dans un récipient non représenté qui se remplit progressivement et se vide sous l'effet du siphon. Dans ce cas, la capacité de ce récipient entre le niveau haut et le niveau bas est choisi de préférence égale à une tasse de café.

L'eau froide ou de préférence pré-chauffée se trouve donc distribuée par un distributeur continu, tel qu'une pompe, à la fontaine intermittente, laquelle la distribue par un tuyau 49 à une petite capacité 50 en forme de manchon annulaire disposée coaxialement à l'extérieur du tube 45 et immobile en rotation, cette capacité 50 comportant une résistance intérieure de chauffage 51 alimentée par des fils 52, tandis que des becs d'écoulement 53 sont pratiqués tout autour de son fond et à l'aplomb de la surface conique 40 du distributeur 39. De la sorte l'eau se trouve chauffée ou réchauffée par cette résistance avant de s'écouler sur le distributeur et, de là, être projetée sur la couche cylindrique de café avant de passer à travers celui-ci et d'être essoré contre la paroi 22.

Les périodes d'arrêt de la fontaine intermittente présentent deux avantages, le premier étant qu'il se produit un arrêt de l'écoulement du café par la goulotte 28 permettant ainsi de retirer une tasse pleine et de la remplacer par une tasse vide sans perdre de café, et le deuxième étant que, lors de l'arrivée suivante de la distribution d'eau sur la résistance chaude 51, il se produit une vaporisation partielle de cette eau qui fait ainsi gonfler les grains de café moulus qui ont été distribués dans l'intervalle au voisinage du fond 24.

On peut ainsi distinguer sur la surface intérieure du manchon 2 et de bas en haut trois zones distinctes successives de largeur progressivement croissante, la première c'est-à-dire la plus basse correspondant à la distribution du café puis à son gonflage à la vapeur, le deuxième située à la hauteur de la nervure 42 correspondant à l'arrosage du café qui produit le maximum de café liquide par passage centrifuge, et la troisième qui surmonte la précédente correspondant à l'essorage poussé de la couronne de marc pour récupérer les dernières gouttes de café et évacuer du marc pratiquement sec à la partie supérieure grâce au moyen général indiqué plus haut. Bien entendu, la goulotte d'évacuation de marc 31 est dirigée vers une cuve à marc faisant partie de l'appareil et qui est vidée périodiquement. L'appareil comporte également une cuve à eau si l'on veut éviter un raccordement sur canalisation.

On voit ainsi que l'appareil selon l'invention, avec des moyens relativement simples et tous montés coaxialement sur le même axe, excepté les diverses cuves, permet de réaliser rapidement et automatiquement toutes les opérations de mouture, de distribution, de vaporisation, de verse, de passage et d'essorage ainsi que de nettoyage du filtre et d'évacuation du marc, l'appareil pouvant ainsi fonctionner d'une manière absolument ininterrompue et produire un aussi grand nombre de tasses de café qu'on le désire à condition simplement de l'approvisionner et de vider sa cuve à marc sans qu'il soit nécessaire pour cela de l'arrêter. Inversement, il est parfaitement possible d'arrêter sa production lorsqu'on le désire en arrêtant la distribution d'eau, puis le moteur après un temps déterminé, la production pouvant reprendre immédiatement dès qu'on le désire à condition que l'eau ait été maintenue à la température.

Bien que l'exemple de réalisation qui précède soit à axe de rotation vertical, cet axe pourrait également être disposé selon tout autre angle d'orientation, par exemple horizontalement, le distributeur rotatif 39 étant alors dans ce cas remplacé par de simples conduits fixes, et le fond 24 étant également facultatif.

**Revendications**

1. Dispositif de filtration centrifuge continue pour séparation, lavage ou épuisement par passage d'une substance liquide à travers une paroi poreuse cylindrique tournant à grande vitesse qui retient des particules solides contenues dans le liquide ou déposées au préalable sur le filtre, la paroi cylindrique rotative étant constituée par un enroulement hélicoïdal à spires jointives d'une longue lanière monté dans une cage rotative constituée par des rouleaux cylindriques disposés selon des génératrices extérieures de la paroi cylindrique, la lanière étant bouclée sur elle-même en un ensemble sans fin et entraînée de manière que la paroi poreuse cylindrique avance lentement dans le sens de l'axe en se renouvelant constamment, dispositif caractérisé par le fait que l'entraînement de la lanière est réalisé par l'entraînement en rotation sur eux-mêmes desdits rouleaux par un mécanisme approprié, et que le bouclage sans fin est réalisé à l'aide d'une spire de retour qui s'étend d'une extrémité à l'autre dudit enroulement hélicoïdal en passant par l'extérieur de l'enroulement.

2. Dispositif selon la revendication 1, caractérisé par le fait que la lanière est à section carrée ou rectangulaire avec trois faces lisses et une surface comportant des encoches évasées vers l'extérieur.

3. Dispositif de filtration selon une ou l'autre des revendications 1 et 2, caractérisé par le fait que la cage est constituée par deux flasques réunis par des entretoises, dont un flasque plein solidaire d'un axe d'entraînement et un flasque annulaire percé d'un alésage central au travers duquel passe l'enroulement hélicoïdal constituant la paroi cylindrique de filtration, les rouleaux de guidage se prolongeant à travers le flasque annulaire en passant dans des encoches formant demi-palier et débouchant vers l'intérieur dans ledit alésage, tandis qu'une fenêtre de forme appropriée permet à ladite spire de retour de traverser également le flasque annulaire, les sens de rotation de l'axe, de rotation des rouleaux et d'enroulement de la lanière dans la partie à spires jointives étant tel que le lent déplacement axial de l'ensemble de la paroi poreuse se fasse en direction du flasque annulaire.

4. Dispositif de filtration selon la revendication 3, caractérisé par le fait que du côté du flasque plein, la lanière provenant de la spire de retour s'enroule en continu sur la surface extérieure cylindrique d'une paroi de fond montée folle autour de l'axe et entraînée par rapport au flasque plein d'un mouvement relatif de rotation à faible vitesse correspondant au mouvement de rotation de la paroi de filtration.

5. Dispositif de filtration selon l'une quelconque des revendications précédentes, caractérisé par le fait que les divers rouleaux cylindriques de la cage sont entraînés en rotation sur eux-mêmes simultanément à la rotation de la cage à l'aide d'un train d'engrenages à partir d'un pignon central monté sur l'axe et pouvant être immobilisé en rotation.

6. Dispositif de filtration selon la revendication 5, caractérisé par le fait que ledit pignon central est immobilisé par un dispositif de frein commandé permettant d'interrompre le mouvement axial sans interrompre le mouvement de rotation du filtre.

7. Dispositif de filtration selon l'une quelconque des revendications précédentes, caractérisé par le fait que la cage est entourée par un carter dont la partie située en deça du flasque annulaire recueille le filtrat et dont la partie située au delà de ce flasque recueille les résidus solides, décollés de l'intérieur de la paroi cylindrique, ou de l'extérieur de la lanière par des dispositifs de raclage appropriés, et acheminés vers un orifice de sortie par des dispositifs de raclage de la paroi intérieure du carter.

8. Dispositif de filtration selon l'une quelconque des revendications précédentes, caractérisé par le fait que son axe est vertical et qu'il comporte intérieurement un distributeur rotatif avec un passage axial pour le produit pulvérulent et une surface extérieure au moins en partie conique pour la distribution du produit liquide.

9. Dispositif de filtration selon la revendication 8, plus particulièrement destiné à la fabrication du café, caractérisé par le fait que son axe se prolonge à travers le distributeur rotatif jusqu'a un broyeur à vis de type connu monté coaxialement au filtre, le distributeur rotatif se prolongeant par une partie tubulaire jusqu'à la base du broyeur à vis.

10. Dispositif selon la revendication 9, caractérisé par le fait que, dans l'espace situé entre le prolongement de l'axe rotatif et le passage axial du distributeur rotatif et de son prolongement tubulaire, se trouve disposé un fil hélicoïdal à grand pas immobilisé axialement et en rotation par sa partie supérieure.

11. Dispositif selon la revendication 10, caractérisé par le fait que la distribution du liquide constitué par de l'eau, préchauffée ou non, se fait à un débit continu mais par l'intermédiaire d'une fontaine intermittente de la capacité d'une tasse de café et qui alimente un dispositif de chauffage ou de surchauffage et de vaporisation disposé coaxialement à l'extérieur du prolongement tubulaire du distributeur rotatif et se déversant sur la partie conique de ce distributeur rotatif.

**Claims**

1. A continuous centrifugal filtering device for separation, washing or draining by passing a liquid substance through a porous cylinder wall rotating at high speed which holds back the solid particles contained in the liquid or deposited beforehand on the filter, the cylinder wall being formed by a helical winding with touching turns of a long band mounted inside a rotary cage formed by cylindrical rollers around the outer generatrices of the cylindrical wall, with the band forming a continuous loop on itself in an endless system and so driven that the porous cylinder wall advances slowly along the centre line and constantly gets renewed, which device is characterized by the fact that the band drive is formed by the rotary drive of the said rollers on their axis through a suitable mechanism and that the endless loop is achieved by means of a return turn which stretches from one end of the said helical winding to the other passing outside the winding.

2. The device according to claim 1, characterized by the fact that the band has a square or rectangular cross-section with three smooth faces and one surface containing notches or slots flared towards the outer side.

3. The filtering device according to either claim 1 or claim 2, characterized by the fact that the cage is formed by two end plates connected by spacers, one end plate being solid and rigidly connected to a drive shaft and one end plate being annular with a centre hole bored through it through which passes the helical winding forming the cylindrical filter wall, with the guide rollers being extended through the annular end plate through notches acting as half (sleeve) bearings which open onto the said centre hole on the inside, whilst a suitably shaped window permits the said return turn also to pass through the annular end plate, the directions of rotation of the shaft, of the rollers and of the band winding in the touching turns section being such that the whole of the porous wall moves slowly round its axis in the same direction as the annular end plate.

4. The filtering device according to claim 3, characterized by the fact that on the solid end plate side the band coming from the return turn is wound continuously onto the cylindrical outer surface of an end wall fitted loose on the shaft and driven with respect to the solid end plate with a low speed rotary motion corresponding to the rotary motion of the filter wall.

5. The filtering device according to any of the previous claims, characterized by the fact that the various cylindrical rollers of the cage are driven in rotation round their axis simultaneously with the rotation of the cage by means of a gear train from a centre pinion mounted on the shaft and capable of being fixed in rotation.

6. The filtering device according to claim 5, characterized by the fact that the said centre pinion is fixed by a controlled brake device which enables the axial motion to be interrupted without interrupting the rotary motion of the filter.

7. The filtering device according to any of the previous claims, characterized by the fact that the cage is surrounded by a casing of which the section located on the same side of the annular end plate collects the filtrate and the part located on the other side of this end plate collects the solid residues, detached from the inside of the cylindrical wall, or from the outside of the band by suitable scraper devices, and sent to an outlet port by devices for scraping the inside wall of the casing.

8. The filtering device according to any of the previous claims, characterized by the fact that its axis is vertical and that it contains inside a rotary distributor with an axial duct for the powder product and an outer surface which is tapered, at least in part, for distribution of the liquid product.

9. The filtering device according to claim 8, more especially designed for producing coffee, characterized by the fact that its centre shaft is extended through the rotary distributor to a screw mill of known type mounted coaxially with the filter, the rotary distributor being extended by a tubular part as far as the base of the screw mill.

10. The device according to claim 9, characterized by the fact that, in the space located between the extension of the rotary shaft and axial duct of the rotary distributor and its tubular extension, a helical wire with a large coil pitch is placed and fixed axially and in rotation at the top.

11. The device according to claim 10, characterized by the fact that the distribution of the liquid which consists of water, preheated or not, occurs at a constant flow rate but through an intermittent fountain or feed system holding the contents of one cup of coffee and feeding a heating or superheating and steam generation device arranged coaxially outside the tubular extension to the rotary distributor and discharging onto the tapered part of this rotary distributor.

**Patentanspruche**

1. Kontinnierliche Fliehkraftfiltriervorrichtung zum Trennen, Auswaschen oder Auslaugen durch Durchgang einer Flüssigkeit durch eine mit hoher Geschwindigkeit drehende zylindrische poröse Wand, welche in der Flüssigkeit enthaltene oder vorher an dieser Wand abgelegte Feststoffpartikel zurückhält, wobei die drehende zylindrische Wand aus einer wendelförmigen Wicklung mit aneinander anliegenden Windungen eines langen Gurtes besteht, welcher in einem drehenden Käfig aus auf den äusseren Mantellinien der zylindrischen Wand liegenden zylindrischen Rollen angeordnet ist, und wobei der Gurt in Form eines endlosen Gebildes in sich geschlossen ist und derart angetrieben wird, daß sich die zylindrische poröse Wand langsam in Achsrichtung bewegt und sich fortlaufend erneuert, dadurch gekennzeichnet, daß der Antrieb des Gurtes durch den Drehantrieb der Rollen um ihre eigene Achse unter Wirkung einer geeigneten Vorrichtung erfolgt und daß der Gurt durch eine Rücklaufwindung in sich geschlossen ist, welche ausserhalb der wendelförmigen Wicklung von einem zum anderen Ende der Wicklung verläuft.

2. Vorrichtung gemäss Anspruch 1, dadurch gekennzeichnet, daß der Gurt einen quadratischen oder rechteckigen Querschnitt besitzt und drei glatte Seitenflächen und eine mit sich nach aussen erweiternden Ausschnitten versehene Seitenfläche aufweist.

3. Vorrichtung nach Anspruch 1 oder 2, dadurch gekennzeichnet, daß der Käfig aus zwei durch Stege miteinander verbundenen Flanschen besteht, wobei einer der Flansche vollwandig ausgebildet und starr mit einer Antriebswelle verbunden ist und der andere Flansch ringförmig ausgebildet und mit einer Mittelbohrung versehen ist, durch welche die die zylindrische Filtrierwand bildende wendelförmige Wicklung verläuft, wobei die Führungsrollen durch den ringförmigen Flansch hindurch verlängert sind, welcher hierzu Ausschnitte besitzt, welche Halblager bilden und nach innen in diese Bohrung münden, während ein Fenster geeigneter Form den Durchgang der Rücklaufwindung durch den ringförmigen Flansch erlaubt, und wobei der Drehsinn der Welle, der Drehsinn der Rollen und der Wicklungssinn des Gurtes in dem Bereich mit aneinander anliegenden Windungen so gewählt sind, daß die gesamte poröse Wand sich langsam axial in Richtung des ringförmigen Flansches bewegt.

4. Vorrichtung gemäss Anspruch 3, dadurch gekennzeichnet, daß sich der Gurt auf der Seite der vollwandigen Flansches, von der Rücklaufwindung kommend, fortlaufend auf die zylindrische Aussenfläche einer Bodenplatte aufwickelt, welche um die Welle frei drehbar gelagert ist und welche gegenüber dem vollwandigen Flansch in eine der Drehung der Filtrierwand entsprechende relative langsame Drehbewegung versetzt wird.

5. Vorrichtung gemäss einem der vorhergehenden Ansprüche, dadurch gekennzeichnet, daß die verschiedenen zylindrischen Rollen des Käfigs während der Drehung des Käfigs über ein Zahnradgetriebe von einem zentralen, auf der Welle gelagerten und gegen Drehung festlegbaren Ritzel um ihre eigene Achse in Drehung versetzt werden.

6. Vorrichtung gemäss Anspruch 5, dadurch gekennzeichnet, daß das zentrale Ritzel durch eine steuerbare Bremsvorrichtung festlegbar ist, wodurch die axiale Bewegung ohne Unterbrechung der Drehbewegung der Filtrierwand unterbrechbar ist.

7. Vorrichtung gemäss einem der vorhergehenden Ansprüche, dadurch gekennzeichnet, daß der Käfig von einem Gehäuse umgeben ist, dessen diesseits des ringförmigen Flansches liegender Teil das Filtrat aufnimmt und dessen jenseits des ringförmigen Flansches liegender Teil die festen Rückstände aufnimmt, welche von der Innenseite der zylindrischen Wand oder von der Aussenseite der Gurtes durch geeignete Abstreifvorrichtungen abgelöst werden und durch Abstreifvorrichtungen der Innenwand der Gehäuses zu einer Auslassöffnung befördert werden.

8. Vorrichtung gemäss einem der vorhergehenden Ansprüche, dadurch gekennzeichnet, daß die Welle senkrecht ist und daß sie innenseitig einen Drehverteiler mit einem axialen Durchgang für den pulverförmigen Feststoff und eine wenigstens teilweise kegelförmige Aussenfläche für die Verteilung der Flüssigkeit besitzt.

9. Vorrichtung gemäss Anspruch 8, insbesondere für die Bereitung von Kaffee, dadurch gekennzeichnet, daß die Welle durch den Drehverteiler hindurch bis zu einer koaxial zur Filtrierwand angeordneten Schraubenmühle bekannter Art verlängert ist und daß der Drehverteiler durch einen rohrförmigen Teil bis zum Unterteil der Schraubenmühle verlängert ist.

10. Vorrichtung gemäss Anspruch 9, dadurch gekennzeichnet, daß in dem Raum zwischen der Verlängerung der sich drehenden Welle und dem axialen Durchgang des Drehverteilers und dessen rohrförmigen Verlängerung ein wendelförmiger Draht mit grosser Steigung angeordnet ist, welcher an sienem oberen Teil gegen axiale Bewegung und Drehbewegung festgelegt ist.

11. Vorrichtung gemäss Anspruch 10, dadurch gekennzeichnet, daß die Flüssigkeit, bestehend aus vorgewärmten oder nicht vorgewärmtem Wasser, in kontinnierlichem Durchsatz verteilt wird unter Zwischenschaltung eines Behälters mit selbsttätigem intermittierendem Wasserauslauf (intermittierender Brunnen), welcher das Fassungsvermögen einer Kaffeetasse besitzt und eine Heiz- oder Überhitzer- und Verdampfervorrichtung speist, welche koaxial ausserhalb der rohrförmigen Verlängerung der Drehverteilers angeordnet ist und deren Auslauf auf den kegelförmigen Teil des Drehverteilers gerichtet ist.

FIG.1
38
37
49
36
35
34
52
48
23
32
45
33
51
50
23
II
II
7
8
31
1
8
3
10
5
53
47
2
40
39
42
22
43
5
41
44
10
26
24
25
26
27
46
25
28
11
12
6
14
14
15
19
16
17
20
13
13

FIG.2
10
5
2
9
8
22
3
30
32
50
21
7
33
8
51
49
10
47
5
32
31
30
29
5
10

FIG.3

32
23
29
23
23
7
3
5
10
5
1
2
10
24
26
26
25
25
6
14
14
15
14
19
16
17
IV
IV

FIG.4

14
15
14
14
19
12
17
16
18
14

FIG.5

4
4
1